# DEMANDE DE BREVET EUROPEEN

(11) **EP 4 599 671 A1**
(43) Date de publication de la demande: **13.08.2025**
(21) Numéro de dépôt: 25156403.5
(22) Date de dépôt: 06.02.2025
(51) Int. Cl.: A01K 1/015

(54) **MATELAS DE CONFORT, POUR UN ANIMAL, NOTAMMENT POUR LES ÉQUIDÉS**

(30) Priorité: 07.02.2024 FR 2401215
(71) Demandeur: Group Elastoteck, 44850 Mouzeil (FR)
(72) Inventeur: BIORET, Jean-Vincent, 44390 PETIT-MARS (FR)
(74) Mandataire: Jacobacci Coralis Harle

(57) **Abrégé**

La présente invention concerne un matelas de confort (1), pour un animal notamment pour les équidés.

Le matelas de confort (1) comprend deux feuilles (2, 3), réalisées en matériau élastique, qui définissent :
- une bande de pliage (5), adaptée à une manoeuvre dudit matelas de confort (1) entre un état replié, en deux, et un état déplié, et
- deux cavités étanches (6), contenant chacune une couche résiliente (7) et agencées de part et d'autre de ladite bande de pliage (5).

## Description

### Domaine technique de l'invention

La présente invention concerne le domaine technique des matelas de confort, pour un animal, notamment pour les équidés.

### Etat de la technique

Dans le monde du soin apporté aux animaux, le bien-être et le confort sont des préoccupations fondamentales.

En ce sens, des matelas de confort ont été développés pour les animaux passant une partie de leur temps en intérieur. Ces matelas ont l'intérêt de fournir un support adéquat, un amorti efficace et une isolation thermique appropriée.

Toutefois, dans certaines situations, le confort des animaux n'est actuellement pas géré d'une manière satisfaisante, avec les risques physiologiques et comportementaux qui en découlent.

Cette problématique se rencontre en particulier lors de déplacement en véhicule (camion ou van), ou lors des déplacements en compétitions.

### Présentation de l'invention

Afin de remédier à l'inconvénient précité de l'état de la technique, la présente invention propose un matelas de confort pour les animaux, notamment pour les équidés.

Le matelas de confort comprend deux feuilles, réalisées en matériau élastique, à savoir :
- une feuille supérieure, destinée à former une face supérieure dudit matelas de confort, et
- une feuille inférieure, destinée à former une face inférieure du matelas de confort qui est adaptée à reposer sur le sol.

Les feuilles sont solidarisées ensemble et définissent :
- une bande de pliage, adaptée à une manoeuvre dudit matelas de confort entre un état replié, en deux, et un état déplié, et
- deux cavités étanches, contenant chacune une couche résiliente et agencées de part et d'autre de ladite bande de pliage.

Une telle solution technique a l'intérêt de former un matelas de confort transportable.

Un tel matelas de confort peut être installé dans un box ou dans un véhicule équestre (camion chevaux ou van chevaux).

Le confort de l'animal est ainsi amélioré : le matelas de confort peut alors suivre l'animal dans ses déplacements. Lorsque l'animal retourne à son lieu de repos, il est exposé à un environnement olfactif et sensoriel familier, induisant une réponse apaisante. Cette familiarité sensorielle contribue de manière substantielle à la réduction du stress, ce qui renforce sa confiance et diminue la susceptibilité aux perturbations environnementales.

D'autres caractéristiques non limitatives et avantageuses du produit conforme à l'invention, prises individuellement ou selon toutes les combinaisons techniquement possibles, sont les suivantes :
- ledit matelas de confort présente un contour rectangulaire comprenant deux bords longitudinaux et deux bords transversaux, et ladite bande de pliage est agencée selon une ligne médiane, de préférence parallèlement auxdits bords longitudinaux ; de préférence, dans son état déplié, ledit matelas de confort présente les cotes suivantes : une cote en largeur allant de 1 500 à 2 000 mm, et une cote en longueur allant de 2 000 à 3 000 mm ; de préférence, ladite bande de pliage présente un axe longitudinal, et une cote en largeur, perpendiculairement audit axe longitudinal, allant de 40 mm à 200 mm ;
- dans son état replié, ladite bande de pliage comporte un rayon de courbure allant de 40 à 80 mm ;
- ledit matelas de confort comporte une bande périphérique, délimitant ledit matelas de confort et entourant lesdites cavités étanches ; ladite bande périphérique comporte de préférence une cote en largeur allant de 40 mm à 200 mm ;
- lesdites feuilles sont solidarisés au niveau de ladite bande de pliage et/ou, le cas échéant, de ladite bande périphérique, par exemple par vulcanisation ;
- ladite couche résiliente est constituée par une plaque de mousse, par exemple en matériau recyclé ou non, par exemple en matériau élastomère, par exemple en polyuréthane ou latex, avantageusement à mémoire de forme ;
- ladite couche résiliente présente une résistance à la traction allant de 10 à 20 MPa, et une capacité en élongation allant de 300 à 500% ;
- chaque couche résiliente comporte une face supérieure, une face inférieure et des faces latérales, laquelle feuille inférieure épouse la face inférieure de ladite couche résiliente, et laquelle feuille supérieure épouse la face supérieure et les faces latérales de ladite couche résiliente ;
- chaque couche résiliente (7) présente une forme d'une plaque parallélépipédique ;
- ledit matelas de confort comporte au moins une poignée, adaptée à la manipulation dudit matelas de confort, laquelle au moins une poignée est ménagée de préférence dans ladite bande périphérique, par exemple sous la forme d'une découpe et/ou au niveau de la bande de pliage, du côté de la feuille inférieure, par exemple sous la forme d'une anse.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale et en perspective d'un matelas de confort selon l'invention, dans son état déplié ;
[Fig. 2] est une vue schématique et en coupe du matelas de confort selon la figure 1, selon un plan de coupe orienté perpendiculairement à la bande de pliage ;
[Fig. 3] est une vue générale et en perspective du matelas de confort selon la figure 1, dans son état replié ;
[Fig. 4] est une vue, générale et schématique, illustrant les couches adaptées à la fabrication du matelas de confort selon l'invention.

Il est à noter que, sur ces figures, les éléments structurels et/ou fonctionnels communs aux différentes variantes peuvent présenter les mêmes références.

La présente invention concerne ainsi un matelas de confort 1 qui est adapté pour un animal, notamment pour les équidés (pour exemple pour les chevaux ou les ânes).

Ce matelas de confort 1 comprend deux feuilles 2, 3, réalisées en matériau élastique, à savoir :
- une feuille supérieure 2, destinée à former une face supérieure du matelas de confort 1, et
- une feuille inférieure 3, destinée à former une face inférieure du matelas de confort 1 qui est adaptée à reposer sur le sol.

De manière générale, les feuilles 2, 3 sont solidarisées ensemble et définissent :
- une bande de pliage 5, adaptée à une manoeuvre en pliage du matelas de confort 1, et
- deux cavités étanches 6, contenant chacune une couche résiliente 7 et agencées de part et d'autre de la bande de pliage 5.

D'autres caractéristiques techniques avantageuses de ce matelas de confort 1 sont encore détaillées ci-après.

### Contour rectangulaire

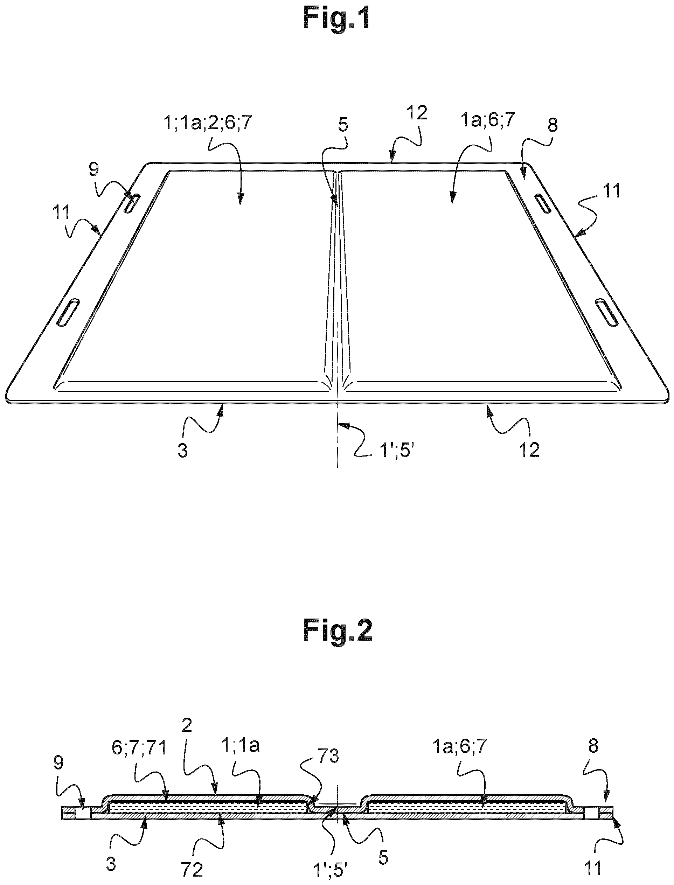

Tel qu'illustré sur la figure 1, en particulier dans un état déplié, le matelas de confort 1 présente avantageusement un contour rectangulaire comprenant deux bords longitudinaux 11 (grands côtés) et deux bords transversaux 12 (petits côtes).

La bande de pliage 5 est agencée selon une ligne médiane 1' du matelas de confort 1, de préférence parallèlement aux bords longitudinaux 11.

Dans son état déplié (figure 1), ledit matelas de confort 1 présente avantageusement les cotes suivantes :
- une cote en largeur allant de 1 500 à 2 000 mm (mesurée parallèlement aux bords transversaux 12), et
- une cote en longueur allant de 2 000 à 3 000 mm (mesurée parallèlement aux bords longitudinaux 11).

### Feuilles réalisées en matériau élastomère

Chaque feuille 2, 3 est réalisée dans au moins un matériau apte à subir une déformation élastique, dit encore « matériau élastique », choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Chaque feuille 2, 3 est avantageusement réalisée monobloc, soit mono-matériau (dans un seul matériau), soit multi-matériaux (avec au moins deux sous-couches superposées réalisées dans des matériaux différents).

Chaque feuille 2, 3 peut encore contenir au moins une sous-couche de renfort (non représentée), choisie par exemple parmi les fibres textiles, les fibres de métal ou tout autre produit apportant la stabilité et/ou la résistance à l'élongation.

Ces sous-couches de renfort consistent par exemple en une armature textile servant de renfort, réalisée avantageusement en un matériau choisi parmi le nylon, le coton, le polyester, le polyamide ou tout autre textile de renfort.

En outre, chaque feuille 2, 3 présente avantageusement une épaisseur allant de 0,5 à 4 mm.

Les feuilles 2, 3 sont avantageusement solidarisés au niveau de la bande de pliage 5 et/ou, le cas échéant, d'une bande périphérique 8.

La technologie d'assemblage peut être choisie par exemple parmi la vulcanisation, mais aussi parmi le collage ou le soudage.

### Bande de pliage

De préférence, la bande de pliage 5 est constituée par une portion de la feuille supérieure 2 et par une portion de la feuille inférieure 3, superposées l'une sur l'autre et séparant les cavités étanches 6 (figure 2 notamment).

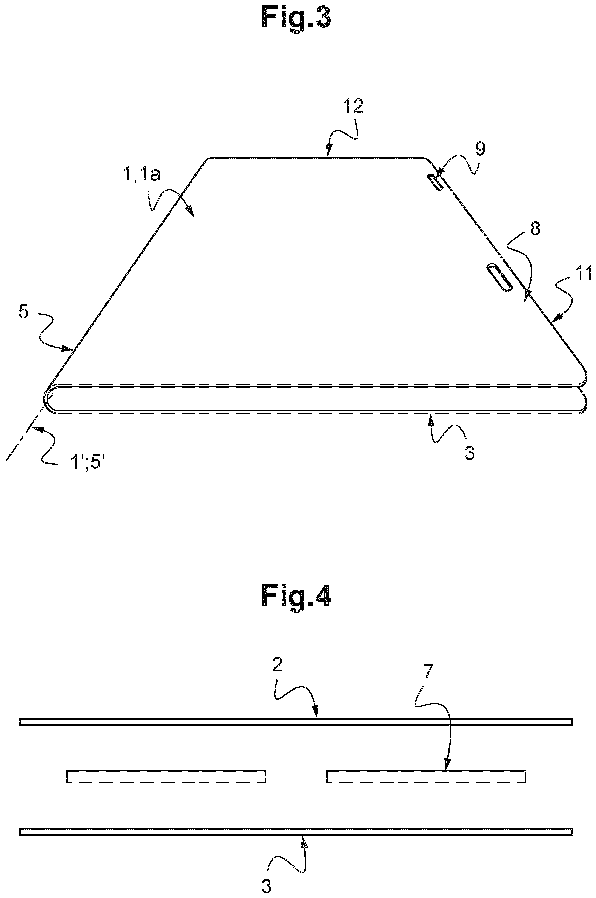

La bande de pliage 5 est adaptée à une manoeuvre en pliage du matelas de confort 1 entre deux états :
- un état déplié, avantageusement plan, tel qu'illustré notamment sur la figure 1, et
- un état replié, en deux, tel qu'illustré notamment sur la figure 3.

Le matelas de confort 1 comporte ainsi deux volets 1a, qui sont raccordé par la bande de pliage 5.

Ces deux volets 1a sont mobiles en rotation l'un par rapport à l'autre, autour de la bande de pliage 5.

De préférence, en état replié, les deux volets 1a viennent se superposer du côté de la feuille supérieure 2.

De manière générale, la bande de pliage 5 présente un axe longitudinal 5', confondu avec une ligne médiane 1' du matelas de confort 1. La bande de pliage 5 est ainsi avantageusement rectiligne.

De préférence, cette bande de pliage 5 présente une cote en largeur, perpendiculairement à cet axe longitudinal 5', allant de 40 mm à 200 mm.

De préférence, cette bande de pliage 5 présente une forme rectangulaire, qui est délimitée par les cavités étanches 6.

Dans son état replié, ladite bande de pliage 5 comporte avantageusement un rayon de courbure allant de 40 à 80 mm.

La bande de pliage 5 s'étend avantageusement parallèlement aux bords longitudinaux 11.

Chaque volet 1a comporte avantageusement un contour rectangulaire qui est délimité par :
- la ligne de pliage 5,
- un bord longitudinal 11, et
- une moitié de longueur des deux bords transversaux 12.

Par ailleurs, dans l'état replié, le matelas de confort 1 présente avantageusement un contour rectangulaire qui est délimité par :
- la ligne de pliage 5,
- les deux bords longitudinaux 11, superposés, et
- les deux bords transversaux 12, repliés en deux

### Bande périphérique

Le matelas de confort 1 comporte avantageusement une bande périphérique 8, délimitant le matelas de confort 1 et entourant les cavités étanches 6.

Cette bande périphérique 8 s'étend avantageusement selon le contour du matelas de confort 1, par exemple selon une forme rectangulaire.

Cette bande périphérique 8 présente ainsi avantageusement des tronçons qui s'étendent le long des deux bords longitudinaux 11 et des deux bords transversaux 12.

La bande périphérique 8 comporte avantageusement une cote en largeur (perpendiculairement au bord 11, 12 attenant) allant de 40 mm à 200 mm.

### Couche résiliente

De manière générale et par exemple, la couche résiliente 7 est sous la forme d'une plaque parallélépipédique.

De manière générale, la couche résiliente 7 est constituée par une plaque de mousse, par exemple en matériau recyclé ou non.

Cette plaque de mousse est par exemple réalisée en matériau élastomère, par exemple en polyuréthane ou latex, avantageusement à mémoire de forme.

Encore par exemple, cette plaque de mousse est constituée de granules de caoutchouc, agglomérés ou non agglomérés, par exemple sous la forme d'une plaque parallélépipédique.

En particulier pour une couche résiliente 7 réalisée en granules de caoutchouc, la couche résiliente 7 présente de préférence les caractéristiques suivantes :
- une résistance à la traction allant de 5 à 25 MPa, et
- une capacité en élongation allant de 300 à 500%.

Encore de manière générale, tel qu'illustré sur la figure 2, chaque couche résiliente 7 comporte :
- une face supérieure 71, du côté de la feuille supérieure 2,
- une face inférieure 72, du côté de la feuille inférieure 3, et
- des faces latérales 73.

En l'espèce, selon le mode de réalisation illustré :
- la feuille inférieure 3 épouse la face inférieure 72 de la couche résiliente 7, et
- la feuille supérieure 2 épouse la face supérieure 71 et les faces latérales 73 de la couche résiliente 7.

En d'autres termes, les couches résilientes 7 font saillie du côté de la feuille supérieure 2.

Par exemple, la couche résiliente 7 est sous la forme d'une plaque parallélépipédique avec :
- une face supérieure 71 et une face inférieure 72 qui sont parallèles, et
- des faces latérales 73, formant un contour rectangulaire.

### Poignée(s)

La matelas de confort 1 comporte avantageusement au moins une poignée 9 qui est adaptée à la manipulation du matelas de confort 1.

Ladite au moins une poignée 9 est ménagée de préférence dans la bande périphérique 8, par exemple sous la forme d'une découpe, le long des bords longitudinaux 11 (figure 1 notamment).

Ladite au moins une poignée 9 peut encore être ménagée au niveau de la bande de pliage 5, du côté de la feuille inférieure 3, par exemple sous la forme d'une anse (non représentée).

### Mise en oeuvre

En pratique, le matelas de confort 1 peut être déposé sur le sol dans son état déplié (figure 1), par exemple sur le sol d'un box.

Dans ce cas, la feuille inférieure 3 repose avantageusement sur le sol.

Si besoin, le matelas de confort 1 peut être plié dans son état replié (figure 3).

Cet état replié est par exemple utile pour le transport du matelas de confort 1 ou pour former un revêtement de sol dans un véhicule.

Par exemple, pour un cheval, le matelas de confort 1 peut être replié en deux, de sorte à être posé sur le sol d'un véhicule équestre. Sur le lieu d'arrivée, le matelas de confort 1 peut être extrait du véhicule pour être déposé sur le sol, dans un état déplié ou replié selon l'espace disponible.

De manière générale, les manipulations du matelas de confort 1 sont facilitées par ladite au moins une poignée 9.

### Fabrication de la bande élastique

Le matelas de confort 1 selon l'invention peut être fabriqué par l'assemblage d'un ensemble de sous-couches superposées, pour former un ensemble de type monobloc.

La technologie d'assemblage peut être choisie par exemple parmi la vulcanisation, le collage, le soudage.

Par exemple, tel que décrit en lien avec la figure 4, le procédé de fabrication comprend :
(i) une étape de superposition de sous-couches 2, 3 en matériau élastique comportant deux surfaces en regard, entre lesquelles sont rapportés :
   - des moyens intercalaires aptes à empêcher localement la solidarisation desdites surfaces en regard desdites sous-couches 2, 3 pour former les cavités étanches 6, ou
   - au moins deux couches résilientes 7,
   puis
(ii) une étape de solidarisation des surfaces en contact desdites sous-couches 2, 3 superposées, en dehors de l'encombrement des moyens intercalaires et/ou des couches résilientes 7.

Les moyens intercalaires consistent avantageusement en tout moyen évitant la solidarisation entre les surfaces en regard des sous-couches 2, 3 à assembler.

Dans le cas d'une vulcanisation, les moyens intercalaires consistent par exemple en des bandes ou des tubes qui sont avantageusement réalisés dans un matériau choisi parmi :
- un film anti-feu contenant un retardateur, par exemple en polypropylène, en acrylonitrile butadiène styrène,
- une couche de silicone,
- une couche d'un matériau élastomère vulcanisé, par exemple un tuyau réalisé par exemple en caoutchouc styrène-butadiène (SBR), en caoutchouc naturel (NR), ou en éthylène-propylène-diène monomère.

Ces moyens intercalaires sont en particulier disposés entre deux sous-couches élastomères 2, 3 à assembler l'une avec l'autre.

Bien entendu, diverses autres modifications peuvent être apportées à l'invention dans le cadre des revendications annexées.

## Revendications

1. Matelas de confort (1), pour un animal notamment pour les équidés, lequel matelas de confort (1) comprend deux feuilles (2, 3), réalisées en matériau élastique, à savoir :
- une feuille supérieure (2), destinée à former une face supérieure dudit matelas de confort (1), et
- une feuille inférieure (3), destinée à former une face inférieure du matelas de confort (1) qui est adaptée à reposer sur le sol,
lesquelles feuilles (2, 3) sont solidarisées ensemble et définissent :
- une bande de pliage (5), adaptée à une manoeuvre dudit matelas de confort (1) entre un état replié, en deux, et un état déplié, et
- deux cavités étanches (6), contenant chacune une couche résiliente (7) et agencées de part et d'autre de ladite bande de pliage (5).

2. Matelas de confort (1), selon la revendication 1, **caractérisé en ce que** ledit matelas de confort (1) présente un contour rectangulaire comprenant deux bords longitudinaux (11) et deux bords transversaux (12),
et **en ce que** ladite bande de pliage (5) est agencée selon une ligne médiane (1'), de préférence parallèlement auxdits bords longitudinaux (11).

3. Matelas de confort (1), selon la revendication 2, **caractérisé en ce que**, dans son état déplié, ledit matelas de confort (1) présente les cotes suivantes :
- une cote en largeur allant de 1 500 à 2 000 mm, et
- une cote en longueur allant de 2 000 à 3 000 mm.

4. Matelas de confort (1), selon l'une quelconque des revendications 2 ou 3, **caractérisé en ce que** ladite bande de pliage (5) présente :
- un axe longitudinal (5'), et
- une cote en largeur, perpendiculairement audit axe longitudinal (5'), allant de 40 mm à 200 mm.

5. Matelas de confort (1), selon l'une quelconque des revendications 1 à 4, **caractérisé en ce que**, dans son état replié, ladite bande de pliage (5) comporte un rayon de courbure allant de 40 à 80 mm.

6. Matelas de confort (1), selon l'une quelconque des revendications 1 à 5, **caractérisé en ce que** ledit matelas de confort (1) comporte une bande périphérique (8), délimitant ledit matelas de confort (1) et entourant lesdites cavités étanches (6).

7. Matelas de confort (1), selon la revendication 6, **caractérisé en ce que** ladite bande périphérique (8) comporte une cote en largeur allant de 40 mm à 200 mm.

8. Matelas de confort (1), selon l'une quelconque des revendications 1 à 7, **caractérisé en ce que** lesdites feuilles (2, 3) sont solidarisés au niveau de ladite bande de pliage (5) et/ou, le cas échéant, de ladite bande périphérique (8), par exemple par vulcanisation.

9. Matelas de confort (1), selon l'une quelconque des revendications 1 à 8, **caractérisé en ce que** ladite couche résiliente (7) est constituée par une plaque de mousse, constituée par exemple de granules de caoutchouc agglomérés ou non agglomérés.

10. Matelas de confort (1), selon l'une quelconque des revendications 1 à 9, **caractérisé en ce que** ladite couche résiliente (7) présente :
- une résistance à la traction allant de 10 à 20 MPa, et
- une capacité en élongation allant de 300 à 500%.

11. Matelas de confort (1), selon l'une quelconque des revendications 1 à 10, **caractérisé en ce que** chaque couche résiliente (7) comporte une face supérieure (71), une face inférieure (72) et des faces latérales (73),
laquelle feuille inférieure (3) épouse la face inférieure (72) de ladite couche résiliente (7), et
laquelle feuille supérieure (2) épouse la face supérieure (71) et les faces latérales (73) de ladite couche résiliente (7).

12. Matelas de confort (1), selon l'une quelconque des revendications 1 à 11, **caractérisé en ce que** chaque couche résiliente (7) présente une forme d'une plaque parallélépipédique.

13. Matelas de confort (1), selon l'une quelconque des revendications 1 à 12, **caractérisé en ce que** ledit matelas de confort (1) comporte au moins une poignée (9), adaptée à la manipulation dudit matelas de confort (1),
laquelle au moins une poignée (9) est ménagée de préférence :
- dans ladite bande périphérique (9), par exemple sous la forme d'une découpe, en combinaison avec la revendication 6, et/ou
- au niveau de la bande de pliage (5), du côté de la feuille inférieure (3), par exemple sous la forme d'une anse.
